# NEUE EUROPÄISCHE PATENTSCHRIFT

(11) **EP 0 515 855 B2**
(45) Veröffentlichungstag und Bekanntmachung des Hinweises auf die Entscheidung über den Einspruch: **13.10.1999**
(45) Hinweis auf die Patenterteilung: 22.11.1995
(21) Anmeldenummer: 92107263.3
(22) Anmeldetag: 29.04.1992
(51) Int. Cl.: C08F 297/08, C08F 255/02

(54) **Hochfliessfähige Propylen-Ethylen-Copolymerisate**
Propylene-ethylene co-polymers with high fluidity
Copolymères de propylène-éthylène à haute fluidité

(30) Priorität: 25.05.1991 DE 4117144
(43) Veröffentlichungstag der Anmeldung: 02.12.1992
(73) Patentinhaber: BASF Aktiengesellschaft, 67063 Ludwigshafen (DE)
(72) Erfinder: Hungenberg, Klaus-Dieter, Dr., W-6943 Birkenau (DE); Schwager, Harald, Dr., W-6720 Speyer (DE); Ruempler, Klaus-Dieter, Dr, W-6706 Wachenheim (DE); Mueller, Patrik, Dr., W-6750 Kaiserlautern (DE)

(56) Entgegenhaltungen:
- DE-A- 3 324 793
- DE-A- 3 702 038
- DE-A- 3 904 079
- DE-A- 4 004 087
- DE-A- 4 011 160
- GB-A- 970 478
- GB-A- 970 479
- GB-A- 1 014 944
- GB-A- 2 101 610
- US-A- 4 454 299
- US-A- 4 882 380
- DEUTSCHE NORM DIN 53 735, Februar 1988 "Bestimmung des Schmelzindex von Thermoplasten"
- Kunststoff-Lexikon, 7. Auflage, Carl Hanser Verlag, München, 1981, S.458
- Technische Information BASF AG, Ludwigshafen, 1983, "Novolen - Polypropylen (pp)"

## Beschreibung

Die vorliegende Erfindung betrifft hochfließfähige Propylen-Ethylen-Copolymerisate mit einem Schmelzflußindex von 2 bis 200 g/10 min bei 230°C und unter einem Gewicht von 2,16 kg, erhältlich durch zweistufige Polymerisation aus der Gasphase heraus in einem bewegten Festbett in Anwesenheit von Wasserstoff als Molmassenregler, mittels eines Ziegler-Natta-Katalysatorsystems aus einer titanhaltigen Feststoffkomponente, die eine auf feinteiligem Silicium- oder Aluminiumoxid oder einem Aluminiumsilicat der Bruttoformel SiO₂•aAl₂O₃, wobei a für einen Wert von 0,001 bis 2 steht, aufgebrachte Magnesiumverbindung enthält und einer Aluminiumkomponente, wobei man,
a) in einer ersten Polymerisationsstufe bei einem Druck von 20 bis 40 bar und einer Temperatur von 60 bis 90°C Propylen polymerisiert, dabei das Verhältnis der Partialdrücke zwischen Wasserstoff und Propylen auf 1:100 bis 10:100 einstellt und anschließend
b) in einer zweiten Polymerisationsstufe bei einem Druck von 10 bis 30 bar, wobei dieser Druck wenigstens 7 bar unter dem Druck der ersten Polymerisationsstufe liegt und einer Temperatur von 40 bis 100°C, dem aus der ersten Polymerisationsstufe ausgebrachten Polypropylen ein Gemisch aus Propylen und Ethylen hinzupolymerisiert, dabei das Partialdruckverhältnis zwischen Wasserstoff und Propylen auf 2:100 bis 12:100 einstellt und das Gewichtsverhältnis zwischen den in der ersten und den in der zweiten Polymerisationsstufe umgesetzten Monomeren so bemißt, daß es im Bereich von 1:1 bis 20:1 liegt.

Außerdem betrifft die Erfindung ein Verfahren zur Herstellung dieser Copolymerisate sowie Folien und Formkörper aus diesen Copolymerisaten.

Die Herstellung von Polymerisaten des Propylens durch Ziegler-Natta-Polymerisation ist bereits mehrfach beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 48 57 613).

Des weiteren sind Verfahren zur Darstellung von Propylen-Ethylen-Copolymeren mit Hilfe eines Ziegler-Natta-Katalysatorsystems bekannt (US-A 4 454 299, US-A 4 455 405, ZA-A 0084/3561, ZA-A 0084/3563), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Um bei diesen Verfahren zu Propylen-Ethylen-Copolymerisaten mit guten anwendungstechnischen Eigenschaften zu gelangen ist es u.a. notwendig, insbesondere im zweiten Reaktor relativ hohe Mengen an Wasserstoff zu verwenden, was einen verfahrenstechnischen Mehraufwand zur Folge hat. Aufgrund dieser speziellen Verfahrensweise zeichnen sich die dabei erhältlichen Copolymerisate insbesondere durch gute Eigenschaften bei der Verarbeitung aus.

In der ZA-A 0084/5261 wird ebenfalls ein Verfahren zur Herstellung von Propylen-Ethylen-Copolymerisaten mit Hilfe eines Ziegler-Natta-Katalysatorsystems beschrieben, in welchem man zunächst gasförmiges Propylen in einer ersten Polymerisationsstufe polymerisiert, das dabei erhältliche Propylenhomopolymerisat anschließend in eine zweite Polymerisationsstufe überführt, wo ein Gemisch aus Propylen und Ethylen hinzupolymerisiert wird. Dieses Verfahren zeichnet sich zum einen durch die Verwendung eines speziellen Ziegler-Natta-Katalysatorsystems und zum anderen auch dadurch aus, daß in der zweiten Polymerisationsstufe ein sehr hoher Bedarf an Wasserstoff zur Molmassenregelung besteht, um zu hochfließfähigen Polymerisaten zu gelangen. Hohe Wasserstoffkonzentrationen wiederum führen zu verringerten Produktivitäten und zu einem verfahrenstechnischen Mehraufwand.

Um diese Schwierigkeiten zu umgehen, werden hochfließfähige Propylenpolymerisate, die sich insbesondere durch eine leichte Verarbeitbarkeit auszeichnen, üblicherweise dadurch hergestellt, daß man Propylenpolymerisate unmittelbar nach deren Herstellung einem thermischen oder peroxidischen Molmassenabbau im Extruder unterwirft. Diese Herstellungsweise ist jedoch verfahrenstechnisch sehr aufwendig und bei Verwendung von Peroxiden aus Sicherheitsgründen nicht unbedenklich.

Der vorliegenden Erfindung lag daher die Aufgabe zugrunde, den geschilderten Nachteilen abzuhelfen und Polymerisate des Propylens mit hoher Fließfähigkeit und guten anwendungstechnischen Eigenschaften zu entwickeln, die ohne verfahrenstechnischen Mehraufwand hergestellt werden können.

Demgemäß wurden die eingangs definierten neuen Propylen-Ethylen-Copolymerisate gefunden.

Die erfindungsgemäßen Propylen-Ethylen-Copolymerisate weisen Schmelzflußindices von 2 bis 200 g/10 min, vorzugsweise von 5 bis 150 g/10 min, bei 230°C und unter einem Gewicht von 2,16 kg auf. Der Schmelzflußindex entspricht dabei der Menge an Polymerisat, die innerhalb von 10 Minuten aus der nach DIN 53 735 genormten Prüfvorrichtung bei einer Temperatur von 230'C und unter einem Gewicht von 2,16 kg ausgepreßt wird.

Das zu diesen Polymerisaten führende verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Die Herstellung der erfindungsgemäßen Propylen-Ethylen-Copolymerisate erfolgt durch zweistufige Polymerisation aus der Gasphase heraus in Anwesenheit von Wasserstoff als Molmassenregler, mittels eines speziellen Ziegler-Natta-Katalysatorsystems aus einer titanhaltigen Feststoffkomponente, die eine auf feinteiligem Silicium- oder Aluminiumoxid oder einem Aluminiumsilicat der Bruttoformel SiO₂•aAl₂O₃, wobei a für einen Wert von 0,001 bis 2 steht, aufgebrachte Magnesiumverbindung enthält und einer Aluminiumkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind.

Bei dem erfindungsgemäß verwendeten feinteiligen Träger handelt es sich insbesondere um Siliciumoxid oder um Aluminiumsilicate der Bruttoformel SiO₂•a Al₂O₃, wobei a für einen Wert von 0,01 bis 0,5 steht.

Die besonders bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der erfindungsgemäß einzusetzenden titanhaltigen Feststoffkomponente u.a. Verbindungen des Magnesiums verwendet. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Üblicherweise enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 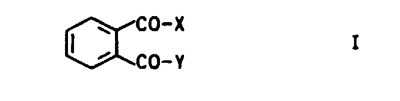 verwendet, wobei X und Y jeweils für Chlor oder einen C₁ - bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.Als Hydroxyverbindungen werden bei diesen Estern die bei Veresterungsreaktionen üblichen Alkohole verwendet, u.a. C₁ - bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂•aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird zusammen mit einer Aluminiumkomponente als Ziegler-Natta-Katalysatorsystem verwendet.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weitere Katalysatorkomponente Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel II

R¹ₙSi(OR²)₄₋ₙ II

wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als weitere Katalysatorkomponente eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 20 bis 40 bar und einer Temperatur von 60 bis 90°C durchgeführt. Bevorzugt sind dabei Drücke von 25 bis 35 bar und Temperaturen von 65 bis 85°C. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, eines Propylenpolymerisats gebildet werden. Die mittlere Verweilzeit des Reaktionsgemisches beträgt in der ersten Polymerisationsstufe üblicherweise 1 bis 5 Stunden, insbesondere 1,5 bis 4 Stunden. Das Verhältnis der Partialdrücke zwischen dem als Regler eingesetzten Wasserstoff und Propylen wird dabei auf 1:100 bis 10:100, insbesondere auf 2:100 bis 8:100 eingestellt.

Das in der ersten Polymerisationsstufe gebildete Propylenpolymerisat wird nach Beendigung der Reaktion zusammen mit dem Katalysator aus der ersten Polymerisationsstufe ausgetragen und in die zweite Polymerisationsstufe eingeführt, wo diesem ein Gemisch aus Propylen und Ethylen hinzupolymerisiert wird. Die Comonomeren werden dabei vorzugsweise in solchen Mengen verwendet, daß das Partialdruckverhältnis zwischen Propylen und Ethylen 0,2:1 bis 10:1, insbesondere 0,5:1 bis 5:1 beträgt. In geringerem Umfang können in dem Comonomerengemisch noch C₄-C₈-Alk-1-ene wie beispielsweise But-1-en, Pent-1-en, Hex-1-en, Hept-1-en oder Oct-1-en enthalten sein. Die Menge der C₄-C₈-Alk-1-ene ist dabei so zu begrenzen, daß das Verhältnis der Partialdrücke zwischen den C₄-C₈-Alk-1-enen und Ethylen im Bereich von 1:100 bis 10:100 liegt. Der in der zweiten Polymerisationsstufe vorherrschende Druck liegt mindestens 7, bevorzugt mindestens 10 bar, unter dem der ersten Polymerisationsstufe und beträgt 10 bis 30, vorzugsweise 10 bis 25 bar. Die Temperatur liegt bei 40 bis 100, bevorzugt bei 60 bis 90°C. Die mittleren Verweilzeiten des Reaktionsgemisches betragen in der zweiten Polymerisationsstufe üblicherweise 1 bis 5 Stunden, insbesondere 1,5 bis 4 Stunden.

Erfindungsgemäß wird in der zweiten Polymerisationsstufe das Verhältnis der Partialdrücke zwischen dem als Regler eingesetzten Wasserstoff und dem Propylen auf 2:100 bis 12:100, insbesondere auf 2,5:100 bis 10:100 eingestellt. Weiterhin ist es dabei erforderlich, das Gewichtsverhältnis zwischen den in der ersten und den in der zweiten Polymerisationsstufe umgesetzten Monomeren so zu bemessen, daß es im Bereich von 1:1 bis 20:1, insbesondere im Bereich von 1,5:1 bis 15:1 liegt.

Weiterhin kann es sich empfehlen, dem Reaktionsgemisch in der zweiten Polymerisationsstufe ein C₁-bis C₈-Alkanol, insbesondere ein C₁-C₄-Alkanol, hinzufügen, welches die Aktivität des Ziegler-NattaKatalysator beeinflußt. Dafür gut geeignete Alkohole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen dem C₁-C₈-Alkanol und der Aluminiumkomponente 0,01:1 bis 10:1, insbesondere 0,02:1 bis 5:1, beträgt.

Die mit Hilfe des geschilderten Verfahrens erhältlichen Propylen-Ethylen-Copolymerisate sind ohne verfahrenstechnischen Mehraufwand leicht herstellbar und weisen im Vergleich zu den bisher bekannten Propylen-Ethylen-Copolymerisaten eine höhere Fließfähigkeit, eine breitere Molmassenverteilung und eine leichtere Verarbeitbarkeit auf. Sie eignen sich besonders zur Herstellung von Folien und Formkörpern.

### Beispiele

Das Verfahren wurde in allen Beispielen 1-4 in zwei hintereinander geschalteten Rührautoklaven mit einem Nutzvolumen von jeweils 180 l durchgeführt. Beide Reaktoren enthielten ein bewegtes Festbett aus feinteiligem Polypropylen.

In den ersten Polymerisationsreaktor wurde Propylen gasförmig eingeleitet und bei einer mittleren Verweilzeit von 2,0 Stunden mit Hilfe des erfindungsgemäß einzusetzenden Ziegler-Natta-Katalysators polymerisiert. Die genauen Versuchsbedingungen, das Verhältnis der Partialdrücke zwischen dem als Regler eingesetzten Wasserstoff und Propylen, das Gewichtsverhältnis zwischen den in der ersten und den in der zweiten Polymerisationsstufe umgesetzten Monomeren und die Schmelzflußindices der erhaltenen Polymerisate sind für alle Beispiele in der Tabelle 1 wiedergegeben.

In allen Beispielen erfolgte die Polymerisation kontinuierlich mit Hilfe eines Ziegler-Natta-Katalysators, wobei pro Stunde 1 g einer titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationszone 0,4 kg Propylen-Copolymerisat erzeugt.

Das im ersten Reaktor gebildete Propylenpolymerisat wurde anschließend zusammen mit dem Katalysator in den zweiten Rührautoklaven übergeführt und dort bei einer Verweilzeit von 2,0 Stunden dem Polymerisat ein Gemisch aus Propylen und Ethylen hinzupolymerisiert. Die genauen Versuchsbedingungen, das Verhältnis der Partialdrücke zwischen Ethylen und Propylen einerseits und zwischen Wasserstoff und Propylen andererseits, die Schmelzflußindices und die Molmassenverteilung Q der erhaltenen Polymerisate sind für alle Beispiele in der Tabelle 2 wiedergegeben.

Die titanhaltige Feststoffkomponente wurde nach folgendem Verfahren hergestellt.

Dazu versetzte man in einer ersten Stufe SiO2, welches einen Teilchendurchmesser von 20 bis 45 µm, ein Porenvolumen von 1,75 cm³/g und eine Oberfläche von 320 m²/g aufwies, mit in n-Heptan gelöstem Butyl-octylmagnesium, wobei pro Mol SiO₂ • 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80°C gerührt und danach mit 6 mol Titantetrachlorid und 0,5 mol Phthalsäuredi-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Die Eigenschaften der bei den Beispielen 1 bis 4 erhaltenen Propylen-Ethylen-Copolymerisate sind der Tabelle 3 zu entnehmen.

### Vergleichsbeispiel A

Analog den Beispielen 1 bis 4 wurde in der ersten Polymerisationsstufe Propylen polymerisiert und dem daraus erhaltenen Polypropylen in einer zweiten Polymerisationsstufe ein Gemisch aus Propylen und Ethylen hinzupolymerisiert. Im Unterschied zu den erfindungsgemäßen Beispielen 1 bis 4 betrug das Verhältnis der Partialdrücke zwischen Wasserstoff und Propylen in der ersten Polymerisationsstufe 0,5:100 und in der zweiten Polymerisationsstufe 1,45:100.

Die dabei erhaltenen Propylen-Ethylen-Copolymerisate weisen vergleichsweise geringe Schmelzflußindices auf (2 g/10 min., bei 230°C und unter einem Gewicht von 2,16 kg, nach DIN 53 735). Um die Fließfähigkeit zu verbessern, wurde das Copolymerisat anschließend in einem Zweischnecken-extruder der Firma Werner & Pfleiderer bei einer Temperatur von 220-230°C, einem Druck von 16 bar und einer mittleren Verweilzeit des Reaktionsgemisches von ca. 4 min einem peroxidischen Molmassenabbau mit Hilfe von 2,5-Dimethyl-2,5-di-(tert.-butylperoxy)-hexan unterworfen.

Die Eigenschaften der dabei erhaltenen Propylen-Ethylen-Copolymerisate können zusammen mit den Reaktionsbedingungen bei der Herstellung dieser Copolymerisate den nachfolgenden Tabellen 1 bis 3 entnommen werden.

### Vergleichsbeispiel B

Analog dem Beispiel 1 wurde in der ersten Polymerisationsstufe Propylen polymerisiert und dem daraus erhaltenen Polypropylen in einer zweiten Polymerisationsstufe ein Gemisch aus Propylen und Ethylen hinzupolymerisiert. Im Unterschied zu den erfindungsgemäßen Beispielen 1 bis 4 betrug das Verhältnis der Partialdrücke zwischen Wasserstoff und Propylen in der zweiten Polymerisationsstufe 40:100.

Die Eigenschaften der dabei erhaltenen Propylen-Ethylen-Copolymerisate können zusammen mit den Reaktionsbedingungen bei der Herstellung dieser Copolymerisate den nachfolgenden Tabellen 1 bis 3 entnommen werden.

**Tabelle 1**

| Reaktionsbedingungen in der ersten Polymerisationsstufe | | | | | |
|---|---|---|---|---|---|
| | Temperatur [°C] | Druck [bar] | Partialdruckverhältnis Wasserstoff: Propylen | Schmelzflußindex^{a} [g/10 min] | Gewichtsverhältnis zwischen den in der ersten und den in der zweiten Polymerisationsstufe umgesetzten Monomeren |
| Bsp. | | | | | |
| 1 | 80 | 32 | 1,8:100 | 26 | 7,7:1 |
| 2 | 80 | 32 | 2,0:100 | 33 | 4,5:1 |
| 3 | 80 | 32 | 4,8:100 | 110 | 4,5:1 |
| 4 | 80 | 32 | 2,0:100 | 33 | 1,8:1 |
| A | 80 | 32 | 0,5:100 | 5 | 4,5:1 |
| B | 80 | 32 | 1,8:100 | 26 | 7,7:1 |

| | | | | | |
|---|---|---|---|---|---|
| ^{a)} Schmelzflußindex des aus der jeweiligen Polymerisationsstufe ausgetragenen Copolymerisats; gemessen bei 230°C und 2,16 kg, nach DIN 53 735 | | | | | |

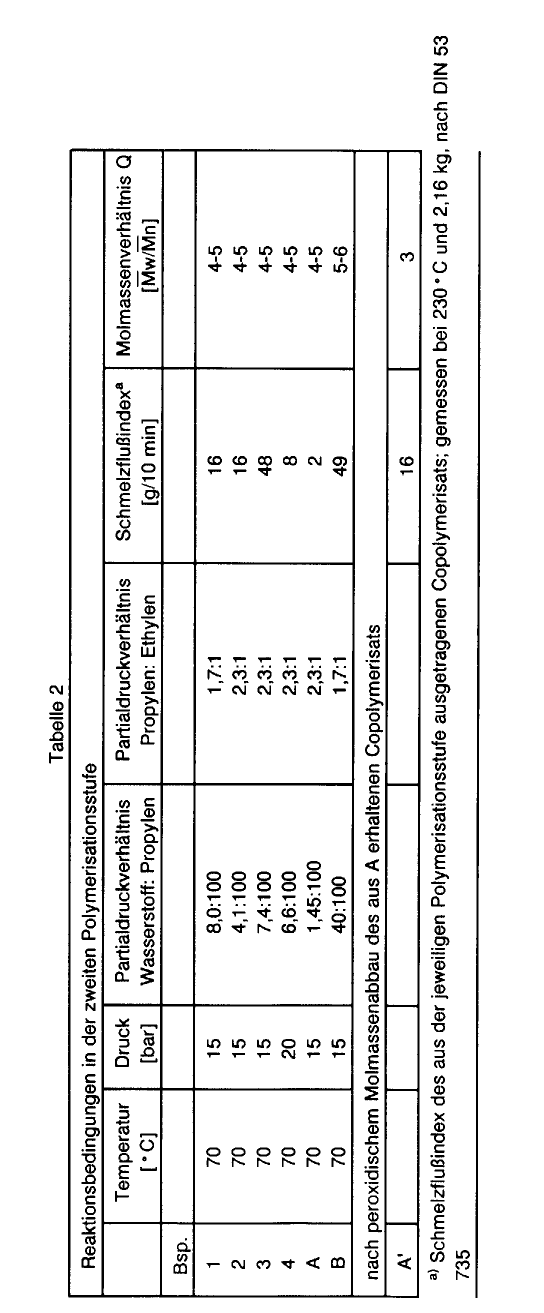

**Tabelle 3**

| Eigenschaften der erhaltenen Propylen-Ethylen-Copolymerisate | | | | |
|---|---|---|---|---|
| | | | Rückstände im Polymerisat | |
| Beispiele | Steifigkeit^{a}(G-Modul)[N/mm²] | Kerbschlagzähigkeit^{b}[kJ/m²] | Chlor [ppm] | Titan [ppm] |
| 1 | 625 | 2,6 | < 12 | < 2 |
| 2 | 520 | 6,2 | < 10 | < 2 |
| 3 | 545 | 4,1 | < 10 | < 2 |
| 4 | 375 | 100 % angebrochen | < 10 | < 2 |
| A | 520 | 6,6 | < 13 | < 2 |

| nach peroxidischem Molmassenabbau | | | | |
|---|---|---|---|---|
| A' | 500 | 5,1 | < 13 | < 2 |
| B | 610 | < 1,0 | < 13 | < 2 |

| | | | | |
|---|---|---|---|---|
| ^{a}) nach DIN 53 445 | | | | |
| ^{b}) nach DIN 53 453, bei -20°C | | | | |

Ein Vergleich zwischen dem Beispiel 2 und dem Vergleichsbeispiel A' zeigt, daß die erfindungsgemäßen Propylen-Ethylen-Copolymerisate bei gleicher Fließfähigkeit, d.h. gleichem Schmelzflußindex eine höhere Steifigkeit und eine höhere Kerbschlagzähigkeit aufweisen. Weiterhin zeigen die erfindungsgemäßen Propylen-Ethylen-Copolymerisate des Beispiels 1 gegenüber den Propylen-Ethylen-Copolymerisaten des Vergleichsbeispiels B eine höhere Steifigkeit und eine verbesserte Kerbschlagzähigkeit.

## Patentansprüche

1. Propylen-Ethylen-Copolymerisate mit einem Schmelzflußindex von 2 bis 200 g/10 min, bei 230°C und unter einem Gewicht von 2,16 kg, erhältlich durch zweistufige Polymerisation aus der Gasphase heraus in einem bewegten Festbett in Anwesenheit von Wasserstoff als Molmassenregler, mittels eines Ziegler-Natta-Katalysatorsystems aus einer titanhaltigen Feststoffkomponente, die eine auf feinteiligem Silicium- oder Aluminiumoxid oder einem Aluminiumsilicat der Bruttoformel SiO₂•aAl₂O₃, wobei a für einen Wert von 0,001 bis 2 steht, aufgebrachte Magnesiumverbindung enthält und einer Aluminiumkomponente, wobei man,
a) in einer ersten Polymerisationsstufe bei einem Druck von 20 bis 40 bar und einer Temperatur von 60 bis 90°C Propylen polymerisiert, dabei das Verhältnis der Partialdrücke zwischen Wasserstoff und Propylen auf 1:100 bis 10:100 einstellt und anschließend
b) in einer zweiten Polymerisationsstufe bei einem Druck von 10 bis 30 bar, wobei dieser Druck wenigstens 7 bar unter dem Druck der ersten Polymerisationsstufe liegt und einer Temperatur von 40 bis 100°C, dem aus der ersten Polymerisationsstufe ausgebrachten Polypropylen ein Gemisch aus Propylen und Ethylen hinzupolymerisiert, dabei das Partialdruckverhältnis zwischen Wasserstoff und Propylen auf 2:100 bis 12:100 einstellt und das Gewichtsverhältnis zwischen den in der ersten und den in der zweiten Polymerisationsstufe umgesetzten Monomeren so bemißt, daß es im Bereich von 1:1 bis 20:1 liegt.

2. Propylen-Ethylen-Copolymerisate nach Anspruch 1, dadurch erhältlich, daß man in der titanhaltigen Feststoffkomponente als Magnesiumverbindung Magnesiumhalogenide, Magnesiumalkyle, Magnesiumaryle, sowie Magnesiumalkoxy- bzw. Magnesiumaryloxyverbindungen verwendet.

3. Propylen-Ethylen-Copolymerisate nach den Ansprüchen 1 oder 2, dadurch erhältlich, daß man bei dem angegebenen Verfahren in der ersten Polymerisationsstufe das Verhältnis der Partialdrücke zwischen Wasserstoff und Propylen auf 2:100 bis 8:100 einstellt.

4. Propylen-Ethylen-Copolymerisate nach den Ansprüchen 1 bis 3, dadurch erhältlich, daß man bei dem angegebenen Verfahren in der zweiten Polymerisationsstufe das Verhältnis der Partialdrücke zwischen Wasserstoff und Propylen auf 2,5:100 bis 10:100 einstellt.

5. Propylen-Ethylen-Copolymerisate nach den Ansprüchen 1 bis 4, dadurch erhältlich, daß man das Gewichtsverhältnis zwischen den in der ersten und den in der zweiten Polymerisationsstufe umgesetzten Monomeren so bemißt, daß es im Bereich von 1,5:1 bis 15:1 liegt.

6. Verfahren zur Herstellung von Propylen-Ethylen-Copolymerisaten gemäß den Ansprüchen 1 bis 5, wobei man aus der Gasphase heraus in einem bewegten Festbett in Anwesenheit von Wasserstoff als Molmassenregler, mittels eines Ziegler-Natta-Katalysatorsystems das neben einer titanhaltigen Feststoffkomponente noch eine Aluminiumkomponente enthält, zunächst in einer ersten Polymerisationsstufe bei einem Druck von 20 bis 40 bar und einer Temperatur von 60 bis 90°C Propylen polymerisiert, dabei das Verhältnis der Partialdrücke zwischen Wasserstoff und Propylen auf 1:100 bis 10:100 einstellt und anschließend in einer zweiten Polymerisationsstufe bei einem Druck von 10 bis 30 bar, wobei dieser Druck wenigstens 7 bar unter dem Druck der ersten Polymerisationsstufe liegt, dem aus der ersten Polymerisationsstufe ausgebrachten Polypropylen ein Gemisch aus Propylen und Ethylen hinzupolymerisiert, dabei das Gewichtsverhältnis zwischen den in der ersten und den in der zweiten Polymerisationsstufe umgesetzten Monomeren so bemißt, daß es im Bereich von 1:1 bis 20:1 liegt, dadurch gekennzeichnet, daß man als Ziegler-Natta-Katalysatorbestandteil eine titanhaltige Feststoffkomponente verwendet, die eine auf feinteiligem Silicium- oder Aluminiumoxid oder einem Aluminiumsilicat der Bruttoformel SiO₂•aAl₂O₃, wobei a für einen Wert von 0,001 bis 2 steht, aufgebrachte Magnesiumverbindung enthält und in der zweiten Polymerisationsstufe das Partialdruckverhältnis zwischen Wasserstoff und Propylen auf 2:100 bis 12:100 einstellt.

7. Folien und Formkörper aus den Propylen-Ethylen-Copolymerisaten nach den Ansprüchen 1 bis 5.

## Claims

1. A propylene-ethylene copolymer having a melt flow index of from 2 to 200 g/10 min at 230°C and under a weight of 2.16 kg, which is obtainable by two-stage polymerization from the gas phase in a moving bed of solids in the presence of hydrogen as molecular mass regulator, by means of a Ziegler-Natta catalyst system comprising a titanium-containing solid component, which contains a magnesium compound applied to finely divided silica or alumina or to an aluminum silicate of the empirical formula SiO₂·aAl₂O₃, where a is from 0.001 to 2, and comprising an aluminum component, where
a) in a first polymerization stage at a pressure of from 20 to 40 bar and at from 60 to 90°C propylene is polymerized, adjusting the ratio of the partial pressures of hydrogen to propylene to from 1:100 to 10:100, and subsequently
b) in a second polymerization stage at a pressure of from 10 to 30 bar, this pressure being at least 7 bar below the pressure of the first polymerization stage, and at from 40 to 100°C, a mixture of propylene and ethylene is polymerized onto the polypropylene discharged from the first polymerization stage, adjusting the ratio of the partial pressures of hydrogen to propylene to from 2:100 to 12:100 and making the weight ratio of the monomers reacted in the first polymerization stage to those reacted in the second polymerization stage such that it is in the range from 1:1 to 20:1.

2. A propylene-ethylene copolymer as claimed in claim 1, which is obtainable by using as magnesium compound, in the titanium-containing solid component, a magnesium halide, magnesium alkyl, magnesium aryl, magnesium alkoxy and/or magnesium aryloxy compound.

3. A propylene-ethylene copolymer as claimed in claim 1 or 2, which is obtainable by adjusting, in the first polymerization stage of the method indicated, the ratio of the partial pressures of hydrogen to propylene to from 2:100 to 8:100.

4. A propylene-ethylene copolymer as claimed in any of claims 1 to 3, which is obtainable by adjusting, in the second polymerization stage of the method indicated, the ratio of the partial pressures of hydrogen to propylene to from 2.5:100 to 10:100.

5. A propylene-ethylene copolymer as claimed in any of claims 1 to 4, which is obtainable by making the weight ratio of the monomers reacted in the first polymerization stage to those reacted in the second polymerization stage such that it is in the range from 1.5:1 to 15:1.

6. A process for the preparation of propylene-ethylene copolymers as claimed in any of claims 1 to 5, in which, from the gas phase in a moving bed of solids in the presence of hydrogen as molecular mass regulator, by means of a Ziegler-Natta catalyst system which contains both a titanium-containing solid component and an aluminum component, first of all in a first polymerization stage at a pressure of from 20 to 40 bar and at from 60 to 90°C propylene is polymerized, adjusting the ratio of the partial pressures of hydrogen to propylene to from 1:100 to 10:100, and subsequently in a second polymerization stage at a pressure of from 10 to 30 bar, this pressure being at least 7 bar below the pressure of the first polymerization stage, a mixture of propylene and ethylene is polymerized onto the polypropylene discharged from the first polymerization stage, and the weight ratio of the monomers reacted in the first polymerization stage to those reacted in the second polymerization stage is made such that it is in the range from 1:1 to 20:1, wherein a titanium-containing solid component is used, as Ziegler-Natta catalyst constituent, which contains a magnesium compound applied to finely divided silica or alumina or to an aluminum silicate of the empirical formula SiO₂·aAl₂O₃, where a is from 0.001 to 2, and in the second polymerization stage the ratio of partial pressures of hydrogen to propylene is adjusted to from 2:100 to 12:100.

7. A film or molding of a propylene-ethylene copolymer as claimed in any of claims 1 to 5.

## Revendications

1. Copolymères propylène/éthylène ayant un indice d'écoulement à l'état fondu de 2 à 200 g/ 10 min., à 230°C et sous un poids de 2,16 kg, obtenus par polymérisation en phase gazeuse en deux étapes dans un lit de solides mis en mouvement, en présence d'hydrogène servant de régulateur de la masse moléculaire et au moyen d'un système catalytique de Ziegler-Natta constitué par un composant solide au titane, qui contient un composé du magnésium fixé sur de l'oxyde de silicium ou de d'aluminium en fines particules ou sur un silicate d'aluminium de formule brute SiO₂.aAl₂O₃ (a ayant une valeur de 0,001 à 2) et par un composant d'aluminium, la polymérisation étant conduite de la manière suivante :
a) dans une première étape de polymérisation, on polymérise du propylène sous une pression de 20 à 40 bar et à une température de 60 à 90°C, le rapport des pressions partielles entre l'hydrogène et le propylène étant réglé entre 1:100 et 10:100, puis,
b) dans une seconde étape de polymérisation, on polymérise additionnellement, sur le polypropylène issu de la première étape de polymérisation, un mélange de propylène et d'éthylène sous une pression de 10 à 30 bar, cette pression étant inférieure d'au moins 7 bar à la pression de la première étape de polymérisation, et à une température de 40 à 100°C, le rapport des pressions partielles entre l'hydrogène et le propylène étant réglé entre 2:100 et 12:100 et le rapport pondéral entre les monomères mis en réaction dans la première étape de polymérisation et dans la seconde étape étant fixé de sorte qu'il se situe dans la gamme de 1:1 à 20:1.

2. Copolymères propylène/éthylène selon la revendication 1, obtenus en utilisant, comme composé du magnésium dans le composant solide au titane, des halogénures de magnésium, des alkylmagnésiums, des arylmagnésiums, ainsi que des composés alcoxymagnésium ou aryloxymagnésium.

3. Copolymères propylène/éthylène selon la revendication 1 ou 2, obtenus en réglant entre 2:100 et 8:100 le rapport des pressions partielles entre l'hydrogène et le propylène dans la première étape de polymérisation du procédé spécifié.

4. Copolymères propylène/éthylène selon l'une quelconque des revendications 1 à 3, obtenus en réglant 2,5:100 et 10:100 le rapport des pressions partielles entre l'hydrogène et le propylène dans la seconde étape de polymérisation du procédé spécifié.

5. Copolymères propylène/éthylène selon l'une quelconque des revendications 1 à 4, obtenus en fixant le rapport pondéral entre les monomères mis en réaction dans la première étape de polymérisation et dans la seconde étape de sorte qu'il se situe dans la gamme de 1,5:1 à 15:1.

6. Procédé de préparation de copolymères propylène/éthylène selon l'une quelconque des revendications 1 à 5, dans lequel on procède en phase gazeuse dans un lit de solides mis en mouvement, en présence d'hydrogène servant de régulateur de la masse moléculaire et au moyen d'un système catalytique de Ziegler-Natta qui contient un composant d'aluminium en plus d'un composant solide au titane, en commençant, dans une première étape de polymérisation, par polymériser du propylène sous une pression de 20 à 40 bar et à une température de 60 à 90°C, le rapport de pressions partielles entre l'hydrogène et le propylène étant réglé entre 1:100 et 10:100, puis, dans une seconde étape de polymérisation, en polymérisant additionnellement, sur le polypropylène issu de la première étape de polymérisation, un mélange de propylène et d'éthylène sous une pression de 10 à 30 bar, cette pression étant inférieure d'au moins 7 bar à la pression de la première étape de polymérisation, le rapport pondéral entre les monomères mis en réaction dans la première étape de polymérisation et dans le seconde étape étant fixé de sorte qu'il se situe dans la gamme de 1:1 à 20:1, caractérisé en ce que l'on utilise comme constituant du catalyseur de Ziegler-Natta, un composant solide au titane qui contient un composé du magnésium fixé sur de l'oxyde de silicium ou d'aluminium en fines particules ou sur un silicate d'aluminium de formule brute SiO₂.aAl₂O₃, a ayant une valeur de 0,001 à 2, et en ce que, dans la seconde étape de polymérisation, on règle entre 2:100 et 12:100 le rapport des pressions partielles entre l'hydrogène et le propylène.

7. Feuilles et corps moulés en les copolymères propylène/éthylène selon l'une quelconque des revendications 1 à 5.
